# EUROPÄISCHE PATENTANMELDUNG

(11) **EP 4 134 219 A1**
(43) Veröffentlichungstag der Anmeldung: **15.02.2023**
(21) Anmeldenummer: 22182020.2
(22) Anmeldetag: 29.06.2022
(51) Int. Cl.: B29C 39/02, C08L 33/12

(54) **AUSHÄRTBARE GIESSMASSE ZUR HERSTELLUNG VON KUNSTSTOFFFORMTEILEN**

(30) Priorität: 11.08.2021 DE 102021208803
(71) Anmelder: BLANCO GmbH + Co KG, 75038 Oberderdingen (DE)
(72) Erfinder: Hajek, Andreas, 76356 Weingarten (DE)
(74) Vertreter: Ullrich & Naumann PartG mbB

(57) **Zusammenfassung**

Die Erfindung betrifft eine aushärtbare Gießmasse zur Herstellung von Kunststoffformteilen, umfassend eine Gießmasse mit einer Bindemittelzusammensetzung und einer Füllstoffzusammensetzung, wobei die Füllstoffzusammensetzung zumindest einen ersten Anteil an anorganischem Füllstoff und einen zweiten Anteil an organischem Füllstoff aufweist, wobei der zweite Anteil an organischem Füllstoff zerkleinerte Nussschalen - Nussschalenanteil, insbesondere körnige Nussschalen, mit einem Gewichtsanteil zwischen 1 Gew.-% und 100 Gew.-% an der Füllstoffzusammensetzung, aufweist.

## Beschreibung

Die Erfindung betrifft eine aushärtbare Gießmasse zur Herstellung von Kunststoffformteilen, umfassend eine Gießmasse mit einer Bindemittelzusammensetzung und einer Füllstoffzusammensetzung, wobei die Füllstoffzusammensetzung zumindest einen ersten Anteil an anorganischem Füllstoff und einen zweiten Anteil an organischem Füllstoff aufweist.

Die Erfindung betrifft weiter eine Verwendung einer aushärtbaren Gießmasse.

Die Erfindung betrifft darüber hinaus ein Kunststoffformteil, hergestellt unter Verwendung einer aushärtbaren Gießmasse.

Aushärtbare Gießmassen werden zur Herstellung von Kunststoffformteilen, insbesondere im Sanitär- oder Küchenbereich, wie beispielsweise Küchenspülen, Arbeitsplatten, Badewannen, Waschbecken oder dergleichen verwendet. Die aushärtbaren Gießmassen umfassen dabei üblicherweise ein Bindemittelmaterial sowie ein Füllstoffmaterial zur Verbesserung der mechanischen Eigenschaften und optischen Strukturierung der Kunststoffformteile, wie dies beispielsweise aus der DE 38 32 351 A1 oder der WO 2005/071000 A1 bekannt geworden ist.

Aus der DE 10 2019 125 777 A1 ist darüber hinaus eine wärmeaushärtbare biobasierte Gießmasse bekannt geworden, umfassend ein oder mehrere mono- und ein oder mehrere polyfunktionelle Acryl- und/oder Methacryl-Biomonomere pflanzlichen oder tierischen Ursprungs, ein oder mehrere Polymere oder Copolymere gewählt aus Polyacrylaten, Polymethacrylaten, Polyolen, Polyestern aus recyceltem Material oder pflanzlichen oder tierischen Ursprungs, und anorganische Füllstoffpartikel natürlichen Ursprungs, wobei der Anteil des oder der mono- und polyfunktionellen Acryl- und Methacryl-Biomonomere 10 - 40 Gew.-%, der Anteil des oder der Polymere oder Copolymere 1 - 16 Gew.-% und der Anteil der anorganischen Füllstoffpartikel 44 - 89 Gew.-% beträgt.

Aus der WO 2021/145472 A1 ist weiter ein umweltfreundlicher Kunstmarmor bekannt geworden, der durch die Pulverisierung von Getreidespelzen oder Fruchtschalen und deren Zugabe bei der Herstellung von Kunstmarmor eine natürliche Schönheit aufweisen kann, sowie ein Verfahren zu dessen Herstellung. Ein derartiger künstlicher Marmor wird unter Verwendung eines ungesättigten Polyesterharzes oder eines Acrylharzes hergestellt und umfasst 5 - 80 Gewichtsteile Getreidespelzenpulver, in Bezug auf 100 Gewichtsteile des ungesättigten Polyesterharzes oder des Acrylharzes, wobei als Zusatzstoffe, bezogen auf 100 Gewichtsteile des ungesättigten Polyesterharzes oder des Acrylharzes, 10 - 100 Gewichtsteile eines oder mehrerer thermoplastischer Niedrigprofil-Additive, ausgewählt aus PS, PE und PVAc, 200 - 300 Gewichtsteile Aluminiumhydroxid als anorganischer Füllstoff, 10 - 100 Gewichtsteile Farbchips, 5 - 100 Gewichtsteile Polyvinylalkoholfaser als Verstärkungsmaterial, 1 - 5 Gewichtsteile eines organischen Peroxids als Härtungskatalysator und 5 - 30 Gewichtsteile eines Trennmittels zugesetzt werden.

Nachteilig dabei ist, dass ein so hergestelltes Kunststoffformteil ein hohes Gewicht und eine schlechte Reinigbarkeit aufweist.

Eine Aufgabe der vorliegenden Erfindung ist es daher, eine alternative aushärtbare Gießmasse sowie ein daraus hergestelltes Kunststoffformteil bereitzustellen, die eine verbesserte Reinigungsfreundlichkeit beziehungsweise Reinigbarkeit und gleichzeitig ein geringeres Gewicht aufweisen.

Die vorliegende Erfindung löst die Aufgabe bei einer aushärtbaren Gießmasse zur Herstellung von Kunststoffformteilen, umfassend eine Gießmasse mit einer Bindemittelzusammensetzung und einer Füllstoffzusammensetzung, wobei die Füllstoffzusammensetzung zumindest einen ersten Anteil an anorganischem Füllstoff und einen zweiten Anteil an organischem Füllstoff aufweist, dadurch, dass der zweite Anteil an organischem Füllstoff zerkleinerte Nussschalen - Nussschalenanteil, insbesondere körnige Nussschalen, mit einem Gewichtsanteil zwischen 1 Gew.-% und 100 Gew.-% an der Füllstoffzusammensetzung aufweist.

Die vorliegende Erfindung löst die Aufgabe ebenfalls durch Verwendung der aushärtbaren Gießmasse gemäß einem der Ansprüche 1-10 zur Herstellung eines Kunststoffformteils für den Küchen- und/oder Sanitärbereich, insbesondere von Küchenspülen und Arbeitsplatten für Küchen.

Die vorliegende Erfindung löst die Aufgabe ebenfalls durch ein Kunststoffformteil, hergestellt unter Verwendung der aushärtbaren Gießmasse gemäß einem der Ansprüche 1-10.

Die vorliegende Erfindung löst die Aufgabe ebenfalls durch eine Verwendung von zerkleinerten Nussschalen zur Verbesserung der Reinigungseigenschaften bei Kunststoffformteilen, insbesondere mit einem Gewichtsanteil an einer Gießmasse der Kunststoffformteile mit einer Füllstoffzusammensetzung und einer Bindemittelzusammensetzung mit einem Gewichtsanteil zwischen 1 Gew.-% und 100 Gew.-% an der Füllstoffzusammensetzung.

Einer der damit erzielten Vorteile ist, dass sich damit die Reinigbarkeit von Oberflächen von Kunststoffformteilen verbessern lässt: Durch Verwendung von einem organischen Füllstoff in Form von zerkleinerten Nussschalen anstelle des üblicherweise anorganischen Füllstoffs konnte überraschenderweise festgestellt werden, dass sich die Reinigbarkeit deutlich verbessern lässt. Zudem sind Nussschalen aus einer Quelle nachwachsender Rohstoffe, was insgesamt zu einem reduzierten "CO₂-Fußabdruck" und zu einem reduzierten Verbrauch von petrochemisch hergestellten Materialien führt.

Der Begriff "Nuss" ist im weitesten Sinne zu verstehen und bezeichnet insbesondere in der Beschreibung, vorzugsweise in den Ansprüchen Schließfrüchte, bei denen insbesondere alle drei Schichten der Fruchtwand verholzt sind oder Steinfrüchte. Meist wird dabei nur ein einzelner, umgangssprachlich ebenfalls als Nuss bezeichneter Samen von der Nussschale umschlossen. Unter dem Begriff "Nuss" sind ebenfalls Kerne von Obst, insbesondere Schalenobst, zu verstehen. Unter den Begriff "Nuss" im Sinne der vorliegenden Erfindung fallen beispielsweise:
- Bucheckern,
- Chilenische Haselnuss,
- Echte Walnuss (Juglans regia),
- Edelkastanie (Maroni),
- Eichel,
- Erdnuss (Arachis hypogaea),
- Hanfnuss,
- Haselnuss,
- Macadamianuss (Queenslandnuss),
- Platanennuss,
- Steinnuss (Tagua),
- Wassernuss,
- Cashewnuss,
- Erdmandel (Chufanuss),
- Kokosnuss,
- Kolanuss,
- Mandel,
- Muskatnuss,
- Paranuss
- Pekannuss,
- Pilinuss,
- Pistazie, und/oder
- Sheanuss.

Weitere Merkmale, Vorteile und weitere Ausführungsformen der Erfindung sind im Folgenden beschrieben oder werden dadurch offenbar.

Gemäß einer vorteilhaften Weiterbildung der Erfindung weist der Nussschalenanteil zwischen 20 Gew.-% und 80 Gew.-%, insbesondere zwischen 40 Gew.-% und 60 Gew.-% an der Füllstoffzusammensetzung auf. Damit lässt sich auf besonders einfache Weise einerseits ein hoher Anteil an nachwachsendem Rohstoff verwenden und gleichzeitig eine gute Reinigbarkeit und ein niedriges Gewicht eines Kunststoffformteils erreichen.

Gemäß einer weiteren vorteilhaften Weiterbildung der Erfindung weist der Nussschalenanteil zumindest einen Anteil, insbesondere vollständig, körnige Nussschalen mit einem mittleren Durchmesser d₅₀ bezogen auf das Gewicht zwischen 200 und 10.000 Mikrometer, insbesondere zwischen 400 und 5.000 Mikrometer, vorzugsweise zwischen 500 und 1.000 Mikrometer auf. Vorteil hiervon ist, dass damit eine gute Homogenisierung der Nussschalen in der Gießmasse erreicht wird.

Gemäß einer weiteren vorteilhaften Weiterbildung der Erfindung weist der Nussschalenanteil mehrere Anteile mit unterschiedlichem mittleren Durchmesser d₅₀ bezogen auf das Gewicht auf. Damit kann die Homogenität und gleichzeitig die Reinigbarkeit in flexibler Weise an die jeweilige Zusammensetzung der Gießmasse angepasst werden.

Gemäß einer weiteren vorteilhaften Weiterbildung der Erfindung weisen die Nussschalen Schalen der Haselnuss und/oder der Walnuss auf, insbesondere überwiegend Walnuss. Dies stellt eine kostengünstige und einfache Verfügbarkeit der Nussschalen sicher.

Gemäß einer weiteren vorteilhaften Weiterbildung der Erfindung weist der erste Anteil an anorganischem Füllstoff Quarzsand auf. Vorteil hiervon ist die Verfügbarkeit des Quarzsandes als kostengünstiger Füllstoff, der zudem eine ausreichende Temperaturbeständigkeit und Kratzfestigkeit für ein aus der Gießmasse hergestelltes Kunststoffformteil bereitstellt.

Gemäß einer weiteren vorteilhaften Weiterbildung der Erfindung weist die Bindemittelzusammensetzung zumindest einen Anteil zumindest einer Zitrusfrucht - Zitrusfruchtanteil, insbesondere von deren Schale, auf. Vorteil hiervon ist, dass auch der üblicherweise hohe Anteil an petrochemischen Bestandteilen der Bindemittelzusammensetzung reduziert werden kann.

Gemäß einer weiteren vorteilhaften Weiterbildung der Erfindung beträgt der Zitrusfruchtanteil bezogen auf die Bindemittelzusammensetzung zwischen 0,1 Gew.-% und 10 Gew.-%, insbesondere zwischen 0,2 Gew.-% und 5 Gew.-%, vorzugsweise zwischen 0,2 Gew.-% und 5 Gew.-%. Vorteil hiervon ist, dass eine ausreichende Härtung von mittels der Gießmasse hergestellten Kunststoffformteilen ermöglicht wird.

Gemäß einer weiteren vorteilhaften Weiterbildung der Erfindung weist der Zitrusfruchtanteil den Bestandteil D-Limonen und/oder L-Limonen und/oder D,L-Limonen auf. Damit kann auf zuverlässige Weise eine ausreichende Härtung von mittels der Gießmasse hergestellten Kunststoffformteilen ermöglicht werden.

Gemäß einer weiteren vorteilhaften Weiterbildung der Erfindung weist die Bindemittelzusammensetzung zumindest einen Anteil eines flüssigen monomeren Acrylats auf. Vorteil hiervon ist, dass dieses bei der Herstellung eines Kunststoffformteils unter Härtung zu einem Polyacrylat polymerisierbar ist. Zur Erhöhung der Viskosität der aushärtbaren Gießmasse kann dem monomeren Acrylat ein Anteil einer präpolymerisierten Acrylatkomponente zugegeben werden, beispielsweise kann zu dem Monomer Methylmethacrylat präpolymerisiertes Polymethylmethacrylat PMMA hinzugefügt werden.

Weitere wichtige Merkmale und Vorteile der Erfindung ergeben sich aus den Unteransprüchen und aus der nachfolgenden Erläuterung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung werden in der nachfolgenden Beschreibung näher erläutert.

Es wurde gefunden, dass bei der erfindungsgemäßen Verwendung von zerkleinerten Nussschalen bei Kunststoffformteilen, insbesondere mit einem Gewichtsanteil an einer Gießmasse der Kunststoffformteile mit einer Füllstoffzusammensetzung und einer Bindemittelzusammensetzung mit einem Gewichtsanteil zwischen 1 Gew.-% und 100 Gew.-% an der Füllstoffzusammensetzung, eine verbesserte Reinigbarkeit und eine geringere Dichte und damit einhergehend ein geringeres Gewicht, neben einer verbesserten Umweltverträglichkeit ermöglicht wird.

### Vergleichsbeispiel

Es wird eine aushärtbare Gießmasse hergestellt, in dem eine Bindemittelzusammensetzung mit einer Füllstoffzusammensetzung versetzt wird. Die Bindemittelzusammensetzung wird im Wesentlichen durch Lösen von PMMA in MMA erhalten, wobei ein Entformungsmittel und Vernetzermonomere zugesetzt werden. Man erhält so einen Bindemittelsirup.

Das Füllstoffmaterial umfasst granulares Quarzmaterial Granucol^{®} (Firma Gebrüder Dorfner GmbH & Co., Hirschau) sowie Wollastonit (Firma Quarzwerke, Frechen). Es wurden die folgenden Typen von Granucol^{®} und Wollastonit eingesetzt:
Granucol^{®} weiß 2/9 (Partikelgröße 315 bis 630 Mikrometer) und
Wollastonit (mittlere Nadellänge 5 bis 11 Mikrometer)

Insbesondere durch die Verwendung verschiedener Granucol^{®}-Typen, die insbesondere unterschiedlich gefärbt sind, kann eine besonders ansprechende Granitdekor-Optik erzielt werden. Der Zusatz von Wollastonit verbessert die mechanischen Eigenschaften der mit der aushärtbaren Gießmasse herstellbaren Kunststoffformteile und verringert insbesondere das Auftreten sogenannter Auskocher auf den Formteilrückseiten, wie sie durch lokale Überhitzungen während des Härtungsprozesses auftreten können. Die Vorteile des Einsatzes von Wollastonit sind in der EP 1 207 180 A1 beschrieben, welche hiermit durch expliziten Verweis einbezogen ist.

Die Füllstoffzusammensetzung wird nun der Bindemittelzusammensetzung zugegeben und mit dieser homogen vermischt. Der aushärtbaren Gießmasse kann zusätzlich eine Farbmaterialzusammensetzung zur Einstellung der gewünschten Farbe des späteren Kunststoffformteils zugesetzt werden.

Anschließend erfolgt die thermische Aushärtung der Gießmasse mittels radikalischer Polymerisation.

Zusätzlich kann die Bindemittelzusammensetzung auch einen oder mehrere Vernetzer umfassen. Als Vernetzer kommen beispielsweise Stoffe aus der Gruppe der aliphatischen oder aromatischen di-, tri- oder multifunktionellen Arcylate oder Methacrylate und/oder der Epoxy-Acrylate oder Methacrylate und/oder der aliphatischen oder aromatischen di-, tri- oder multifunktionellen Urethan Acrylate oder Methacrylate und/oder di-, tri- oder multifunktionellen Polyester Acylate oder Methacrylate und/oder der di-, tri- oder multifunktionellen Silikon Acrylate oder Methacrylate, Silikon Urethan Acrylate oder Methacrylate und Silikon Polyester Acrylate oder Methacrylate oder Kombinationen hiervon in Frage.

Die Zusammensetzung der aushärtbaren Gießmasse gemäß dem Vergleichsbeispiel ist nochmals in allgemeiner Form in der folgenden Tabelle 1 wiedergegeben, wobei die Gehalte der einzelnen Komponenten in Gewichtsprozent angegeben sind.

**Tabelle 1**

| **Rezepturbezeichnung** | **Vergleichsbeispiel [Gew.-%]** |
|---|---|
| Bindemittel (PMMA in MMA) | 41,1 |
| Trimethylpropantrimethacrylat | 0,9 |
| Peroxidmischung | 1,0 |
| Granucol^{®} weiß 2/9 | 55,0 |
| Wollastonit | 2,0 |
| Summe | 100,0 |

Die aushärtbare Gießmasse wird - wie vorstehend erwähnt - nun in eine Gießform für eine Küchenspüle gegeben und unter Wärmeeinwirkung polymerisiert.

Auf eine Sichtseite einer so erhaltenen Küchenspüle wurden nun verschiedene Chemikalien und Lebensmittel jeweils aufgebracht und für jeweils 16 Stunden einwirken gelassen.

| **Probe** | **Noch vorhandene Flecken nach:** | | |
|---|---|---|---|
| | **Abspülen mit dest. Wasser** | **Abreinigung mit Wasser** | **Abreinigung mit Aluminiumoxid** |
| Vergleichsbeispiel | Methylenblau | Methylenblau | - |
| | Schwarztee | (schwach) | - |

| **Probe** | **Rußanschmutzung Reinigbarkeit - Umdrehungen** |
|---|---|
| Vergleichsbeispiel | 20/30 |

| **Probe** | **Dichte (Accupyk) [g/cm³]** |
|---|---|
| Vergleichsbeispiel | 2,0 |

Die Abreinigung mit Wasser beziehungsweise Aluminiumoxid erfolgte mit einer Reinigungsapparatur mit 1 kg Auflagegewicht und 30 Umdrehungen.

### Beispiel

Es wird eine erfindungsgemäße Gießmasse hergestellt, die in ihrer Zusammensetzung der aushärtbaren Gießmasse gemäß Vergleichsbeispiel größtenteils entspricht, wobei eine Menge an Nussschalengranulaten im Austausch gegen eine entsprechende Menge Granucol^{®} weiß 2/9 zugesetzt wird. Darüber hinaus wurde eine Menge an Bindemittel im Austausch gegen eine entsprechende Menge D,L-Limonen zugesetzt. Die restlichen Gehälter an Materialen werden gleich gehalten.

Die Zusammensetzung der aushärtbaren Gießmasse gemäß Beispiel ist in der folgenden Tabelle 2 wiedergegeben, wobei die Gehalte der einzelnen Komponenten in Gewichtsprozent angegeben sind, jeweils bezogen auf 100 kg aushärtbare Gießmasse.

**Tabelle 2**

| **Rezepturbezeichnung** | **Beispiel [Gew.-%]** |
|---|---|
| Bindemittel (PMMA in MMA) | 39,6 |
| Trimethylpropantrimethacrylat | 0,9 |
| Peroxidmischung | 1,0 |
| D,L-Limonen | 1,5 |
| Nussschalengranulat 450-800 | 15,0 |
| Nussschalengranulat 450-1000 | 15,0 |
| Granucol^{®} weiß 2/9 | 25,0 |
| Wollastonit | 2,0 |
| Summe | 100,0 |

Auf eine Sichtseite einer so erhaltenen Küchenspüle wurden nun verschiedene Chemikalien und Lebensmittel jeweils aufgebracht und für jeweils 16 Stunden einwirken gelassen.

| **Probe** | **Noch vorhandene Flecken nach:** | | |
|---|---|---|---|
| | **Abspülen mit dest. Wasser** | **Abreinigung mit Wasser** | **Abreinigung mit Aluminiumoxid** |
| Beispiel | keine | - | - |

| **Probe** | **Rußanschmutzung Reinigbarkeit - Umdrehungen** |
|---|---|
| Beispiel | 10/10 |

| **Probe** | **Dichte (Accupyk) [g/cm³]** |
|---|---|
| Beispiel | 1,37 |

Die Abreinigung mit Wasser beziehungsweise Aluminiumoxid erfolgte mit einer Reinigungsapparatur mit 1 kg Auflagegewicht und 30 Umdrehungen. Bei der Überprüfung der Reinigbarkeit anhand der Rußanschmutzung wurden jeweils zwei Versuche mit dem Vergleichsbeispiel und dem Beispiel durchgeführt. Die Anzahl der jeweiligen Umdrehungen wurde so lange erhöht, bis das jeweils gleiche optische Ergebnis erhalten wurde.

Als Ergebnis bleibt festzuhalten, dass die Verschmutzung beim Beispiel mit dem gleichen Reinigungsverfahren, verglichen mit dem Versuchsbeispiel, besser entfernt werden konnte, das heißt es waren weniger Umdrehungen mittels der Reinigungsapparatur bis zum Erhalten eines vollständigen Entfernens der Rußanschmutzung nötig. Schließlich konnte anhand der Ermittlung des jeweiligen Gewichts der Küchenspüle und deren Volumen beziehungsweise eines entsprechenden vergleichbaren Probekörpers eine geringere Dichte beim Beispiel, verglichen mit dem Vergleichsbeispiel, erzielt werden.

Die Ergebnisse zeigen somit, dass das Ersetzen von organischem petrochemischem Füllstoff durch körnige Nussschalen bei der aushärtbaren Gießmasse zu einer deutlichen Verbesserung der Reinigbarkeit führt.

Die mit der aushärtbaren Gießmasse gemäß einer Ausführungsform der vorliegenden Erfindung hergestellten Küchenspülen weisen im Vergleich zu der im Vergleichsbeispiel erhaltenen aushärtbaren Gießmasse ein geringeres Gewicht beziehungsweise eine geringere Dichte sowie eine verbesserte Reinigbarkeit auf.

Der Effekt der verbesserten Reinigbarkeit tritt somit bei dem erfindungsgemäßen Einsatz von zerkleinerten Nussschalen auf.

Zusammenfassend weist zumindest eine der Ausführungsformen der Erfindung zumindest einen der folgenden Vorteile und/oder zumindest eines der folgenden Merkmale auf:
- Verbesserte Reinigbarkeit der Oberfläche von Kunststoffformteilen.
- Verbesserte Umweltverträglichkeit, insbesondere geringerer CO₂-Einsatz bei der Herstellung.
- Hohe Flexibilität hinsichtlich der optischen Gestaltung von Oberflächen.

Obwohl die vorliegende Erfindung anhand bevorzugter Ausführungsbeispiele beschrieben wurde, ist sie nicht darauf beschränkt, sondern auf vielfältige Weise modifizierbar.

## Patentansprüche

1. Aushärtbare Gießmasse zur Herstellung von Kunststoffformteilen, umfassend eine Gießmasse mit einer Bindemittelzusammensetzung und einer Füllstoffzusammensetzung, wobei die Füllstoffzusammensetzung zumindest einen ersten Anteil an anorganischem Füllstoff und einen zweiten Anteil an organischem Füllstoff aufweist,
**dadurch gekennzeichnet, dass**
der zweite Anteil an organischem Füllstoff zerkleinerte Nussschalen - Nussschalenanteil, insbesondere körnige Nussschalen, mit einem Gewichtsanteil zwischen 1 Gew.-% und 100 Gew.-% an der Füllstoffzusammensetzung aufweist.

2. Aushärtbare Gießmasse gemäß Anspruch 1, **dadurch gekennzeichnet, dass** der Nussschalenanteil zwischen 20 Gew.-% und 80 Gew.-%, insbesondere zwischen 40 Gew.-% und 60 Gew.-%, an der Füllstoffzusammensetzung aufweist.

3. Aushärtbare Gießmasse gemäß einem der Ansprüche 1-2, **dadurch gekennzeichnet, dass** der Nussschalenanteil zumindest einen Anteil, insbesondere vollständig körnige Nussschalen, mit einen mittleren Durchmesser d₅₀ bezogen auf das Gewicht zwischen 200 und 10.000 Mikrometer, insbesondere zwischen 400 und 5.000 Mikrometer, vorzugsweise zwischen 500 und 1.000 Mikrometer, aufweist.

4. Aushärtbare Gießmasse gemäß Anspruch 3, **dadurch gekennzeichnet, dass** der Nussschalenanteil mehrere Anteile mit unterschiedlichem mittleren Durchmesser d₅₀ bezogen auf das Gewicht aufweist.

5. Aushärtbare Gießmasse gemäß einem der Ansprüche 1-4, **dadurch gekennzeichnet, dass** die Nussschalen Schalen der Haselnuss und/oder der Walnuss aufweisen, insbesondere überwiegend Walnuss.

6. Aushärtbare Gießmasse gemäß einem der Ansprüche 1-5, **dadurch gekennzeichnet, dass** der erste Anteil an anorganischem Füllstoff Quarzsand aufweist.

7. Aushärtbare Gießmasse gemäß einem der Ansprüche 1-6, **dadurch gekennzeichnet, dass** die Bindemittelzusammensetzung zumindest einen Anteil zumindest einer Zitrusfrucht - Zitrusfruchtanteil, insbesondere von deren Schale, aufweist.

8. Aushärtbare Gießmasse gemäß Anspruch 7, **dadurch gekennzeichnet, dass** der Zitrusfruchtanteil bezogen auf die Bindemittelzusammensetzung zwischen 0,1 Gew.-% und 10 Gew.-%, insbesondere zwischen 0,2 Gew.-% und 5 Gew.-%, vorzugsweise zwischen 0,2 Gew.-% und 5 Gew.-%, beträgt.

9. Aushärtbare Gießmasse gemäß einem der Ansprüche 7-8, **dadurch gekennzeichnet, dass** der Zitrusfruchtanteil den Bestandteil D-Limonen und/oder L-Limonen und/oder D,L-Limonen aufweist.

10. Aushärtbare Gießmasse gemäß einem der Ansprüche 1-9, **dadurch gekennzeichnet, dass** die Bindemittelzusammensetzung zumindest einen Anteil eines flüssigen monomeren Acrylats aufweist.

11. Verwendung einer aushärtbaren Gießmasse gemäß einem der Ansprüche 1-10 zur Herstellung eines Kunststoffformteils für den Küchen- und/oder Sanitärbereich, insbesondere von Küchenspülen und Arbeitsplatten für Küchen.

12. Kunststoffformteil, hergestellt unter Verwendung der aushärtbaren Gießmasse gemäß einem der Ansprüche 1-10.

13. Verwendung von zerkleinerten Nussschalen zur Verbesserung der Reinigungseigenschaften bei Kunststoffformteilen, insbesondere mit einem Gewichtsanteil an einer Gießmasse der Kunststoffformteile mit einer Füllstoffzusammensetzung und einer Bindemittelzusammensetzung mit einem Gewichtsanteil zwischen 1 Gew.-% und 100 Gew.-% an der Füllstoffzusammensetzung.
